# EUROPÄISCHE PATENTSCHRIFT

(11) **EP 1 439 205 B1**
(45) Veröffentlichungstag und Bekanntmachung des Hinweises auf die Patenterteilung: **20.04.2005**
(21) Anmeldenummer: 03000976.5
(22) Anmeldetag: 17.01.2003
(51) Int. Cl.: C08K 5/11, C08L 21/00

(54) **Kautschukmischung und Reifen**
Rubber composition and tire
Composition de caoutchouc et pneu

(43) Veröffentlichungstag der Anmeldung: 21.07.2004
(73) Patentinhaber: Continental Aktiengesellschaft, 30165 Hannover (DE)
(72) Erfinder: Dettmer, Fabian, Dr., 38106 Braunschweig (DE); Wagemann, Jürgen, Dr., 30167 Hannover (DE); Appel, Andrea, Dr., 30177 Hannover (DE)

(56) Entgegenhaltungen:
- EP-A- 0 367 979
- EP-A- 1 179 560
- DE-B- 1 301 467

## Beschreibung

Die Erfindung betrifft eine schwefelvernetzbare Kautschukmischung, insbesondere für Laufstreifen von Reifen, enthaltend zumindest einen Dienkautschuk und 10 bis 100 phr (Gewichtsteile, bezogen auf 100 Gewichtsteile der gesamten Kautschuke in der Mischung) zumindest eines polaren Füllstoffes. Die Erfindung betrifft ferner einen Reifen, dessen Laufstreifen zumindest zum Teil aus der mit Schwefel vulkanisierten Kautschukmischung besteht.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um diese Zielkonflikte zu lösen, sind schon vielfältige Ansätze verfolgt worden. So hat man beispielsweise unterschiedlichste, auch modifizierte Polymere, Harze und hochdisperse Füllstoffe für Kautschukmischungen eingesetzt und man hat versucht, die Vulkanisateigenschaften durch Modifikation der Mischungsherstellung zu beeinflussen.

Neben Kautschuk und Füllstoffen bilden die Weichmacher eine andere wichtige Klasse von Zuschlagstoffen. Weichmacher werden Kautschukmischungen zum Teil in großen Mengen zugesetzt, um dem Mischungspreis zu senken, die Fließeigenschaften der Mischung zu verbessern (Energieeinsparung bei der Verarbeitung, Vermeidung von Energiespitzen), die Füllstoffdispersion zu verbessern, das Konfektionier- und das Klebverhalten zu verbessern und die physikalischen Eigenschaften der Mischung und der daraus hergestellten Vulkanisate zu beeinflussen. So kann man mit den Weichmachern insbesondere Einfluß auf die Glasübergangstemperatur der Mischung nehmen und damit die Wintereigenschaften positiv beeinflussen.

Neben den üblicherweise in Kautschukmischungen verwendeten aromatischen, naphthenischen und paraffinischen Mineralölweichmachern gibt es verschiedene synthetische Weichmacher, die in Kautschukmischungen eingesetzt werden, wie z. B. Thioester, Phthalsäureester, aromatische Polyether, Phosphorsäureester, Sebacinsäureester oder niedrigmolekulare, polymere Polyester.

Beispielsweise werden in der EP 0 708 137 A1 Vulkanisate beschrieben, die zur Vermeidung des Auftretens von schwarzen Markierungen durch Abrieb und von Verfärbungen in der Ausgangskautschukmischung keine aromatischen Prozessöle enthalten, aber wenigstens einen Weichmacher (z. B. Dioctylphthalat), flüssiges Polymer und/oder Asphaltene und als Füllstoff Kieselsäure und Ruß im Volumenverhältnis 1:1 bis 20:1 aufweisen.

Aus der US 2002/0010275 A1 ist es bekannt, einer Laufstreifenkautschukmischung 1 bis 20 phr eines niedermolekularen Polyesterweichmachers ausgewählt aus Polyestersebacat, Triethylenglycolcaprat-caprylat, Triethylenglycoldiheptanoat, Triethylenglycoldipelargonat und Triethylenglycoldi-2-ethylhexoat hinzuzufügen, wodurch der Laufstreifen weicher gemacht und das Traktionsverhalten von Hochleistungsreifen verbessert werden soll.

In der US 2002/0042462 A 1 werden Kautschukmischungen für Reifen offenbart, die zur Verbesserung der Verarbeitbarkeit ohne Nachteile in anderen Eigenschaften verstärkende Füllstoffe und einen Ester ausgewählt aus einer einem Ester einer aliphatischen, polyvalenten Carbonsäure mit einem Polyoxyalkylenderivat und einem Ester aus einer aromatischen, polyvalenten Carbonsäure mit einem Polyoxyalkylenderivat.

In der US 4,737,535 werden Reifen beschrieben, die verbesserte Haftungseigenschaften, Fahrstabilität und Tieftemperatureigenschaften aufweisen sollen. Die Reifen weisen Laufstreifen aus einer Kautschukmischung auf, die 15 bis 50 phr SSBR, zumindest einen Weichmacher, ausgewählt aus einem Sebacinsäureester, einem Adipinsäureester und einem Fettsäureester, und Ruß enthält.

Bei der Verwendung der genannten synthetischen Weichmacher ergeben sich oftmals Probleme mit deren Flüchtigkeit, der Verträglichkeit mit der Kautschukmischung und mit der Verarbeitbarkeit. Zum Teil kann man bei den Vulkanisaten ölige Ausschwitzungen der Weichmacher beobachten und die Weichmacher lassen sich nur schwer vollständig homogen einmischen. Außerdem hat sich gezeigt, dass die Einmischung von tieftemperaturflexibleren, polaren Weichmachern, wie z. B. Dioctylsebacat, zwar die Tieftempratureigenschaften etwas verbessert, aber zu z. T. erheblichen Nachteilen in anderen Reifeneigenschaften, z. B. den Nassbremseigenschaften, mit sich bringen kann.

Der vorliegenden Erfindung liegt nun die Aufgabe zugrunde, Kautschukmischungen für Laufstreifen von Reifen bereitzustellen, die sich gut verarbeiten lassen und deren Vulkanisate eine hohe Dämpfung bei guter Tieftemperaturflexibilität aufweisen. Die letztgenannten Eigenschaften bewirken beim Reifen ein gutes Nassbremsverhalten und gute Wintereigenschaften (Schnee- und Eisgriff).

Gelöst wird diese Aufgabe erfindungsgemäß dadurch, dass die Kautschukmischung als Weichmacher 5 bis 100 phr zumindest eines Polyesters aus dimerisierten Fettsäuren mit 18 bis 44 Kohlenstoffatomen (Anzahl der Kohlenstoffatome in der dimerisierten Form) und Diolen mit 2 bis 7 Kohlenstoffatomen enthält.

Die in dieser Schrift verwendete Angabe phr (parts per hundred parts of rubber by weight) ist dabei die in der Kautschukindustrie übliche Mengenangabe für Mischungsrezepturen.

Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass gerade diese spezielle Klasse der Polyester aus dimerisierten Fettsäuren und Diolen in Kautschukmischungen mit polaren Füllstoffen bei den Vulkanisaten zu einem besonders guten Dämpfungsverhalten bei gleichzeitig guter Tieftemperaturflexibilität führt. Diese Polyester lassen sich gut in die Mischung einmischen.

Außerdem wurde festgestellt, dass diese Polyester als Weichmacher ein geringe Migrationstendenz aufweisen, d. h. sie migrieren (diffundieren) innerhalb des Reifens nicht von einem Reifenbauteil in ein anderes und Schwitzen auch nicht aus. Die Migration von Weichmacher hätte nämlich den Nachteil, dass die anderen, angrenzenden Reifenbauteile durch das Hineinwandern des Weichmachers und die den Weichmacher enthaltenden Bauteile durch das Hinauswandern ihre Eigenschaften im Verlauf des Reifenlebens ändern und dadurch der Reifen in seinen Gesamteigenschaften verändert werden kann.

Der positive Effekt der speziellen Polyester als Weichmacher könnte darin begründet liegen, dass die Polyester ein für die Verwendung in Dienkautschukmischungen mit polaren Füllstoffen ausgewogenes Verhältnis von polaren zu unpolaren Molekülteilen aufweisen. Der unpolare Teil kann mit dem unpolaren Dienkautschuk in der Mischungsmatrix wechselwirken, während der polare Teil mit dem polaren Füllstoff, z. B. Kieselsäure, in Wechselwirkung treten kann. Der Weichmacher ist dadurch gut mit der gesamten Mischung verträglich und weist eine niedrige Migrationstendenz auf.

Die Polyester aus dimerisierten Fettsäuren und Diolen sind an sich bekannt und werden z. B. als Ausgangstoffe für Polymere im Rahmen der Polyurethanchemie angewendet (s. z. B. Dimerized Fatty Acid Technology in Polyurethanes, Polyurethanes Conference 2000, Oct. 8-11, 2000, S. 297- 301).

Die Kautschukmischung enthält 5 bis 100 phr des speziellen Polyesters. Bevorzugt werden der Kautschukmischung 10 bis 40 phr des Polyester zugesetzt, da mit diesen Mengen besonders gute Verbesserungen hinsichtlich der Dämpfung erzielt werden, ohne dass die Mischung zu weich wird und sich verarbeitungstechnische Probleme ergeben.

Gemäß einer vorteilhaften Weiterbildung der Erfindung werden Polyester eingesetzt, die ein Molekulargewicht von 500 bis 5000 g/mol, eine Hydroxyl-Zahl (mg KOH/g) von 10 bis 420, eine Glasübergangstemperatur T_{G} < 0 °C, einen Schmelzpunkt < 10 °C, einen Siedepunkt > 180 °C und einen Flammpunkt > 200 °C aufweisen. Diese Polyester lassen sich einfach einmischen, sind kommerziell in großen Mengen erhältlich (z. B. die Produktgruppe PRIPLAST®, Uniqema, Niederlande) und lassen sich auf Grund der hohen Flamm- und Siedepunkte ohne Probleme bei der Herstellung von Kautschukmischungen in herkömmlichen Mischaggregaten verarbeiten, da Temperaturen von mehr als 180 °C bei der Mischungsherstellung vermieden werden. Die Polyester bewirken auch durch eine etwas höhere Mooney-Viskosität der Mischung, was zu einer verbesserten Verarbeitbarkeit der Mischung beiträgt.

Besonders bevorzugt werden Polyester eingesetzt, die eine Hydroxyl-Zahl von 20 bis 100, eine Glasübergangstemperatur T_{G} < -20 °C, einen Schmelzpunkt ≤ 0 °C und einem Siedepunkt > 200 °C aufweisen. Mit derartigen Polyestern wird eine besonders niedrige Migrationstendenz und ein besonders positiver Einfluß auf die Wintereigenschaften bei gleichzeitiger Verbesserung der Nässeeigenschaften des Reifens bewirkt.

Die Polyester enthalten als dimerisierte Fettsäure bevorzugt eine dimerisierte Fettsäure mit 36 Kohlenstoffatomen. Diese dimerisierten Fettsäuren lassen sich in großen Mengen aus den in der Natur vorkommenden ungesättigten C18-Fettsäuren, z. B. Ölsäure oder Linolsäure, herstellen.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung enthält 10 bis 100 phr, vorzugsweise 60 bis 80 phr, zumindest eines polaren Füllstoffes. Als polare Füllstoffe können alle dem Fachmann bekannten Füllstoffe verwendet werden. Bevorzugt wird der polare Füllstoff jedoch ausgewählt aus der Gruppe bestehend aus Kieselsäure, Aluminiumhydroxid und Schichtsilikaten. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, sogenannte HD-Kieselsäuren (z. B. Ultrasil 7000 der Firma Degussa), zum Einsatz kommen.

Zur Verbesserung der Verarbeitbarkeit und zur Anbindung des polaren Füllstoffes, insbesondere der Kieselsäure, an den Dienkautschuk werden Silan-Kupplungsagenzien in Kautschukmischungen eingesetzt. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung).

Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann. Unter Umständen kann es angebracht sein, die Menge an Silan-Kupplungsagens in der erfindungsgemäßen Mischung gegenüber der herkömmlich eingesetzten Menge bei Mischungen ohne den speziellen Polyester aus dimerisierter Fettsäure und Diol zu erhöhen, da es möglich ist, dass ein Teil des Silan-Kupplungsagens durch Reaktion mit den noch freien Carboxyl- und Hydroxylgruppen des speziellen Polyesters verbraucht wird und daher nicht mehr für die Anbindung des Füllstoffes an den Kautschuk zur Verfügung steht.

Die erfindungsgemäße Kautschukmischung kann als weiteren Füllstoff Ruß enthalten. Der Zusatz von Ruß bringt verarbeitungstechnische Vorteile. Die verwendeten Ruße sollten insbesondere folgende Charakteristika aufweisen: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg.

Die Kautschukmischung kann außerdem noch andere Füllstoffe, wie beispielsweise Alumosilicate, Kreide, Stärke, Magnesiumoxid, Titandioxid oder Kautschukgele, und weitere Weichmacher, wie z. B. aromatische, naphthenische oder paraffinische Mineralölweichmacher (z. B. MES (mild extraction solvate) oder TDAE (treated distillate aromatic extract)), enthalten. Die speziellen Polyester können dabei die herkömmlichen Weichmacher ganz oder teilweise ersetzen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendem durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.
Je nach Mischungssystem kann es angebracht sein die Menge des Vulkanisationssystems aus Schwefel und vulkanisationsbeeinflussender Substanz anzupassen, da die Polyester die Vulkanisationszeiten unterschiedlich beeinflussen können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Nach der Vulkanisation des Fahrzeugreifens weist der Reifen ein gutes Nassbremsverhalten und gute Wintereigenschaften auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist. Bei einem Aufbau aus Cap und Base bietet die erfindungsgemäße Mischung als Cap den Vorteil, dass der Weichmacher im Vulkanisat eine niedrige Migrationstendenz aufweist und daher in der Cap verbleibt.

Die Erfindung soll nun anhand von Vergleichs- und Ausführungsbeispielen, die in den Tabellen 1 bis 4 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet.

Die Mischungen 1 und 2 unterschieden sich nur in den eingesetzten Weichmachern und der Mengen an Weichmachern. Genauso verhält es sich mit dem Mischungspaaren 3/4, 6/7 und 8/9. Bei der Mischung 5 wurde im Vergleich zur Mischung 4 der Anteil an Silan-Kupplungsagens erhöht. Die Mengen an Weichmacher bzw. Silan-Kupplungsagens wurden so angepasst, dass die sich ergebenden Vulkanisate eine ähnliche Härte aufwiesen.

Die Mischungsherstellung erfolgte unter üblichen Bedingungen in zwei Stufen in einem Labortangentialmischer, wobei sich die Polyester als Weichmacher problemlos einmischen ließen. Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften bestimmt, die in der Tabelle 2 aufgelistet sind. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit bezogen auf das Volumen der Probe ist
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei 0 und 60 °C gemäß DIN 53 513 aus Messung mit konstanter Verformungsamplitude von 0,2 % bei 10 % Verformung in Kompression mit 10 Hz dynamischer Verformungsfrequenz.
- dynamischer Speichermodul E' bei -20 und 60 °C gemäß DIN 53 513 aus Messung mit konstanter Verformungsamplitude von 0,2 % bei 10 % Verformung in Kompression mit 10 Hz dynamischer Verformungsfrequenz

Die statischen Materialparameter Zugfestigkeit, Reißdehnung, Spannungswert und Bruchenergiedichte geben Anhaltspunkte für die strukturelle Haltbarkeit der Vulkanisate. Die Rückprallelastizität ist ein Maß für die Dämpfung und lässt Rückschlüsse auf die Nassbremseigenschaften eines Reifens zu, wenn der mit der Fahrbahn in Berührung kommende Teil aus der Kautschukmischung hergestellt ist. Je geringer die Rückprallelastizität, des besser sind im Allgemeinen die Nassbremseigenschaften des Reifens. Der dynamische Speichermodul E' bei -20 °C kann mit der Kälteflexibilität korreliert werden, wobei niedrigere Werte des Speichermoduls für eine verbesserte Kälteflexibilität und bei Reifenlaufstreifen für verbesserte Wintereigenschaften stehen.

**Tabelle 1**

| **Bestandteile** | **Einheit** | **1(V)** | **2(E)** | **3(V)** | **4(E)** | **5(E)** | **6(V)** | **7(E)** | **8(V)** | **9(E)** |
|---|---|---|---|---|---|---|---|---|---|---|
| Naturkautschuk | phr | 35 | 35 | 30 | 30 | 30 | 20 | 20 | 80 | 80 |
| | | | | | | | | | | |
| BR^{a} | phr | 25 | 25 | 40 | 40 | 40 | 50 | 50 | 15 | 15 |
| | | | | | | | | | | |
| S-SBR^{b} | phr | 40 | 40 | 30 | 30 | 30 | 30 | 30 | 5 | 5 |
| | | | | | | | | | | |
| Ruß N339 | phr | 75 | 75 | 14 | 14 | 14 | 14 | 14 | 54 | 54 |
| | | | | | | | | | | |
| Kieselsäure^{c} | phr | 25 | 25 | 87 | 87 | 87 | 77 | 77 | 25 | 25 |
| | | | | | | | | | | |
| Weichmacheröl | phr | 50 | 31 | 47 | 15 | 15 | 38 | 12 | 31,5 | 5 |
| | | | | | | | | | | |
| Polyester aus Fetts. und Diol^{d} | phr | - | 15 | - | 31 | 31 | - | 30 | - | 23 |
| | | | | | | | | | | |
| Alterungsschutzmittel | phr | 3 | 3 | 4 | 4 | 4 | 6,5 | 6,5 | 6 | 6 |
| | | | | | | | | | | |
| Zinkoxid | phr | 3 | 3 | 3 | 3 | 3 | 3 | 3 | 3 | 3 |
| | | | | | | | | | | |
| Stearinsäure | phr | 1,5 | 1,5 | 2 | 2 | 2 | 2 | 2 | 1,5 | 1,5 |
| | | | | | | | | | | |
| SilanKupplungsagens^{e} | phr | 2 | 2 | 7 | 7 | 8 | 7 | 7 | 2 | 2 |
| | | | | | | | | | | |
| Beschleuniger | phr | 2 | 2 | 3,8 | 3,8 | 3,8 | 3,9 | 3,9 | 2 | 2 |
| | | | | | | | | | | |
| Schwefel | phr | 1,7 | 1,7 | 1,6 | 1,6 | 1,6 | 1,6 | 1,6 | 2 | 2 |

| | | | | | | | | | | |
|---|---|---|---|---|---|---|---|---|---|---|
| ^{a} High-cis Polybutadien vom Nd-Typ | | | | | | | | | | |
| ^{b} lösungspolymerisiertes Styrol-Butadien-Copolymer, VSL-5025, Bayer AG, Deutschland | | | | | | | | | | |
| ^{c} Silika VN 3, Degussa Deutschland | | | | | | | | | | |
| ^{d} Polyester aus dimerisierter C18-Fettsäure und niedermolekularem Diol, MG 1300 g/mol, Hydroxyl-Zahl 88, T_{G} ca. -50 °C, Smp. -20 °C, 10 °C, Sdp. > 200 °C, Fp. 230 °C, Priplast 3198, Uniqema, Niederlande | | | | | | | | | | |
| ^{e} flüssiges Gemisch aus 3,3'-Bis(triethoxysilylpropyl)polysulfiden, S₁: 5,8 %, S₂: 70 %, S₃: 17,9 %, S₄: 2,4 %, Sulfidgehalt insgesamt: 96 % | | | | | | | | | | |

**Tabelle 2**

| **Eigenschaften** | **Einheit** | **1(V)** | **2(E)** | **3(V)** | **4(E)** | **5(E)** | **6(V)** | **7(E)** | **8(V)** | **9(E)** |
|---|---|---|---|---|---|---|---|---|---|---|
| Zugfestigkeit bei RT | MPa | 11,8 | 12,9 | 14,3 | 12,5 | 13,3 | 14,7 | 12,5 | 16,0 | 16,8 |
| | | | | | | | | | | |
| Reißdehnung bei RT | % | 513 | 500 | 627 | 631 | 609 | 621 | 612 | 517 | 557 |
| | | | | | | | | | | |
| Spannungswert 100 % | MPa | 1,65 | 1,72 | 1,66 | 1,57 | 1,69 | 1,65 | 1,6 | 1,54 | 1,54 |
| | | | | | | | | | | |
| Spannungswert 300 % | MPa | 6,64 | 7,54 | 6,39 | 5,74 | 6,38 | 6,31 | 5,68 | 8,35 | 8,30 |
| | | | | | | | | | | |
| Bruchenergiedichte | J/cm³ | 24,9 | 26,3 | 37,7 | 34 | 34,9 | 37,3 | 32 | 31,4 | 37 |
| | | | | | | | | | | |
| Shore-A-Härte bei RT | Shore A | 61,7 | 61,4 | 61,9 | 61 | 61,9 | 62,4 | 62 | 55,6 | 55,4 |
| | | | | | | | | | | |
| Shore-A-Härte bei 70 °C | Shore A | 57,2 | 57,6 | 57,3 | 56,1 | 57,1 | 58,1 | 57,2 | 53,1 | 51,7 |
| | | | | | | | | | | |
| Rückprallelastizität bei RT | % | 24,9 | 21,1 | 34,3 | 28,8 | 29,1 | 37,5 | 29,3 | 38,6 | 27,8 |
| | | | | | | | | | | |
| Rückprallelastizität bei 70 °C | % | 32,1 | 29,5 | 47,1 | 42,3 | 41 | 44,7 | 37,4 | 49,9 | 37,7 |
| | | | | | | | | | | |
| | | | | | | | | | | |
| | | | | | | | | | | |
| tan δ bei 0 °C | - | 0,26 | 0,265 | 0,273 | 0,312 | 0,308 | - | - | - | - |
| | | | | | | | | | | |
| tan δ bei 60 °C | - | 0,189 | 0,185 | 0,125 | 0,166 | 0,161 | - | - | - | - |
| | | | | | | | | | | |
| E' bei-20°C | MPa | 19,1 | 22,8 | 52,4 | 59,4 | 52,1 | - | - | - | - |
| | | | | | | | | | | |
| E' bei 60°C | MPa | 16,7 | 18,5 | 11,7 | 11,5 | 10,0 | - | - | - | - |

Aus der Tabelle 2 wird ersichtlich, dass bei Verwendung des speziellen Polyesters aus dimerisierter Fettsäure und Diol die Rückprallelastizität deutlich abgesenkt und damit das Nassbremsverhalten verbessert werden kann, ohne dass die statischen Materialparameter maßgeblich verändert werden. Gleichzeitig bleibt die dynamische Elastizität bei tiefen Temperaturen, ersichtlich aus E', nahe zu erhalten, wodurch die Wintereigenschaften konstant erhalten bleiben.

Ferner wurden Reifen mit einer Laufstreifencap aus den Mischungen 3 und 4 hergestellt und mit den Reifen Versuche zum Nassbremsen auf Asphalt und Beton sowie zum Trockenbremsen als auch zum Bremsen auf Schnee und Eis durchgeführt. Ferner wurde der Rollwiderstand gemessen. Die Reifeneigenschaften des Reifens mit der Mischung 3 wurden gleich 100 gesetzt, Werte größer als 100 bedeuten eine Verbesserung in der entsprechenden Eigenschaft (rating). Die Ergebnisse der Versuche sind in Tabelle 3 dargestellt.

**Tabelle 3**

| **Eigenschaften aus Reifenversuch** | **Reifen mit Mischung 3 als Cap** | **Reifen mit Mischung 4 als Cap** |
|---|---|---|
| Nassbremsen mit ABS auf Asphalt | 100 | 118 |
| Nassbremsen mit ABS auf Beton | 100 | 111 |
| Trockenbremsen | 100 | 100 |
| Schneetraktion | 100 | 97 |
| Eisbremsen (Halle) | 100 | 111 |
| Rollwiderstand | 100 | 97 |

Der Tabelle 3 kann man entnehmen, dass das Bremsverhalten auf nasser Straße mit der Mischung 4, die den speziellen Polyester enthält, als Cap-Mischung deutlich verbessert werden kann, wobei die anderen Reifeneigenschaften auf ähnlichem Niveau verbleiben.

Um die Migrationstendenz der Weichmacher von einer Mischung in eine andere zu untersuchen, wurden Prüfkörper aus typischen Cap- und Basemischungen hergestellt, wobei die Capmischungen kieselsäurehaltige Mischungen waren und die Basemischungen keine Kieselsäure enthielten. Die Capmischungen der ersten Versuchsreihe unterschieden sich nur in ihrem Weichmacher und zwar enthielt eine Mischung 32 phr TDAE und die andere Mischung enthielt statt dessen 31 phr eines speziellen Polyesters (erfindungsgemäße Mischung)(unterschiedliche phr Mengen, um Vulkanisate gleicher Härte zu erhalten). Bei der Basemischung der Versuchsreihe 1 handelte es sich um eine Mischung mit 14,5 phr eines aromatischen Mineralölweichmachers. Auch die Capmischungen der zweiten Versuchsreihe unterschieden sich nur in ihrem Weichmacher und zwar enthielt eine Mischung 26,5 phr MES und die andere Mischung enthielt statt dessen 23 phr eines speziellen Polyesters (erfindungsgemäße Mischung). Bei der Basemischung der Versuchsreihe 2 handelte es sich um eine Mischung mit 35 phr MES.

Bei dem Polyester handelte es sich bei beiden Versuchsreihen um einen aus dimerisierter C18-Fettsäure und niedermolekularem Diol, MG 1300 g/mol, Hydroxyl-Zahl 88, T_{G} ca.-50 °C, Smp. -20 °C, 10 °C, Sdp. > 200 °C, Fp. 230 °C, Priplast 3198, Uniqema, Niederlande.
Aus den Mischungen wurden jeweils 2 mm dicke vulkanisierte Platten hergestellt, die in gleich große Streifen mit einem Gewicht von 7 bis 8 g geschnitten wurden. Nach dem Wiegen der Streifen wurde jeweils ein Streifen aus einer Capmischung auf den einer Basemischung zu einem Cap-Base-Paket zusammen gelegt, die Pakete wurden jeweils in Aluminiumfolie eingewickelt und in PE-Folie zum Luftabschluß eingeschweißt. Nach 7, 37 und 90 Tagen Alterung bei 50 °C wurden die Pakete auseinander genommen und zur Quantifizierung der Weichmacherdiffusion Cap- und Base-Streifen getrennt gewogen. Die Ergebnisse dieser Versuche sind in Tabelle 4 zusammengefasst.

**Tabelle 4**

| **Alterungsdauer [d]** | **Weichmacher in Cap** | **Gewichtsveränderung Cap [%]** | **Weichmacher in Base** | **Gewichtsveränderung Base [%]** |
|---|---|---|---|---|
| Versuchsreihe 1 | | | | |
| 7 | TDAE | -2,9 | arom.Öl | +2,3 |
| 37 | TDAE | -4,6 | arom.Öl | +4,3 |
| 90 | TDAE | -4,9 | arom.Öl | +4,7 |
| 7 | Polyester | +0,1 | arom. Öl | -0,3 |
| 37 | Polyester | -0,4 | arom.Öl | 0 |
| 90 | Polyester | -1,0 | arom. Öl | +0,8 |

| Versuchsreihe 2 | | | | |
|---|---|---|---|---|
| 7 | MES | +0,1 | MES | -0,3 |
| 37 | MES | +0,5 | MES | -0,7 |
| 90 | MES | +0,7 | MES | -0,7 |
| 7 | Polyester | +2,6 | MES | -3,1 |
| 37 | Polyester | +4,0 | MES | -4,5 |
| 90 | Polyester | +3,7 | MES | -4,1 |

Die prozentualen Gewichtsänderungen aufeinander gelegter Cap- und Base-Streifen unterscheiden sich geringfügig, da die Ausgangsstreifen von Cap und Base nicht identisches Gewicht hatten (zwischen 7 und 8 g).

Aus der Tabelle 4 wird ersichtlich, dass bei Einsatz der erfindungsgemäßen Mischung als Capmischung im Zusammenspiel mit einer Basemischung, die aromatische Mineralölweichmacher enthält, eine deutlich verringerte Migration des Polyesters von der Cap in die Base zu beobachten ist (deutlich geringere Gewichtsabnahme der Cap als bei Einsatz von TDAE). Betrachtet man den unteren Teil der Tabelle kann man sogar eine starke Migration von MES aus der Base in die Cap, die aus der erfindungsgemäßen Mischung besteht, beobachten (Gewichtszunahme der Cap), so kann einem Nachhärten der Cap entgegengewirkt werden.

## Patentansprüche

1. Schwefelvemetzbare Kautschukmischung, insbesondere für Laufstreifen von Reifen, enthaltend zumindest einen Dienkautschuk und 10 bis 100 phr (Gewichtsteile, bezogen auf 100 Gewichtsteile der gesamten Kautschuke in der Mischung) zumindest eines polaren Füllstoffes,
**dadurch gekennzeichnet, dass**
die Kautschukmischung als Weichmacher 5 bis 100 phr zumindest eines Polyesters aus dimerisierten Fettsäuren mit 18 bis 44 Kohlenstoffatomen und Diolen mit 2 bis 7 Kohlenstoffatomen enthält.

2. Kautschukmischung nach Anspruch 1, **dadurch gekennzeichnet, dass** die Kautschukmischung 10 bis 40 phr des bzw. der Polyester(s) enthält.

3. Kautschukmischung nach Anspruch 1 oder 2, **dadurch gekennzeichnet, dass** der Polyester ein Molekulargewicht von 500 bis 5000 g/mol, eine Hydroxyl-Zahl von 10 bis 420, eine Glasübergangstemperatur T_{G} < 0 °C, einen Schmelzpunkt < 10 °C, einen Siedepunkt > 180 °C und einen Flammpunkt > 200 °C aufweist.

4. Kautschukmischung nach Anspruch 3, **dadurch gekennzeichnet, dass** der Polyester eine Hydroxyl-Zahl von 20 bis 100, eine Glasübergangstemperatur T_{G} < -20 °C, einen Schmelzpunkt ≤ 0 °C und einem Siedepunkt > 200 °C aufweist.

5. Kautschukmischung nach zumindest einem der vorhergehenden Ansprüche, **dadurch gekennzeichnet, dass** die dimerisierte Fettsäure 36 Kohlenstoffatome enthält.

6. Kautschukmischung nach zumindest einem der vorhergehenden Ansprüche, **dadurch gekennzeichnet, dass** der bzw. die Dienkautschuk(e) ausgewählt sind aus der Gruppe, bestehend aus Naturkautschuk, synthetischem Polyisopren, Polybutadien und Styrol-Butadien-Copolymer.

7. Kautschukmischung nach zumindest einem der vorhergehenden Ansprüche, **dadurch gekennzeichnet, dass** sie 60 bis 80 phr zumindest eines polaren Füllstoffes enthält.

8. Kautschukmischung nach zumindest einem der vorhergehenden Ansprüche, **dadurch gekennzeichnet, dass** der bzw. die polare(n) Füllstoff(e) ausgewählt ist bzw. sind aus der Gruppe bestehend aus Kieselsäure, Aluminiumhydroxid und Schichtsilikaten.

9. Reifen, dessen Laufstreifen zumindest zum Teil aus einer mit Schwefel vulkanisierten Kautschukmischung nach zumindest einem der Ansprüche 1 bis 8 besteht.

## Claims

1. Sulphur-vulcanizable rubber blend, in particular for tyre treads, comprising at least one diene rubber and from 10 to 100 phr (parts by weight, based on 100 parts by weight of the total rubbers in the blend) of at least one polar filler, **characterized in that** the rubber blend contains, as a plasticizer, from 5 to 100 phr of at least one polyester of dimerized fatty acids having 18 to 44 carbon atoms and diols having 2 to 7 carbon atoms.

2. Rubber blend according to Claim 1, **characterized in that** the rubber blend contains from 10 to 40 phr of the polyester or polyesters.

3. Rubber blend according to Claim 1 or 2, **characterized in that** the polyester has a molecular weight of from 500 to 5000 g/mol, a hydroxyl number of from 10 to 420, a glass transition temperature T_{G} of < 0°C, a melting point of < 10°C, a boiling point of > 180°C and a flashpoint of > 200°C.

4. Rubber blend according to Claim 3, **characterized in that** the polyester has a hydroxyl number of from 20 to 100, a glass transition temperature T_{G} of < -20°C, a melting point of ≤ 0°C and a boiling point of > 200°C.

5. Rubber blend according to at least one of the preceding claims, **characterized in that** the dimerized fatty acid contains 36 carbon atoms.

6. Rubber blend according to at least one of the preceding Claims, **characterized in that** the diene rubber or rubbers is or are selected from the group consisting of natural rubber, synthetic polyisoprene, polybutadiene and styrene/butadiene copolymer.

7. Rubber blend according to at least one of the preceding claims, **characterized in that** it contains from 60 to 80 phr of at least one polar filler.

8. Rubber blend according to at least one of the preceding claims, **characterized in that** the polar filler or fillers is or are selected from the. group consisting of silica, aluminium hydroxide and sheet silicates.

9. Tyres whose treads at least partly comprise a sulphur-vulcanized rubber blend according to at least one of Claims 1 to 8.

## Revendications

1. Composition de caoutchouc réticulable au soufre, en particulier pour bandes de roulement de pneumatiques, contenant au moins un caoutchouc diène et de 10 à 100 phr (parties en poids par rapport à 100 parties en poids de l'ensemble de caoutchoucs dans la composition) d'au moins une charge polaire, **caractérisée en ce que** la composition de caoutchouc contient en tant que plastifiant 5 à 100 phr d'au moins un polyester d'acides gras dimérisés ayant de 18 à 44 atomes de carbone et de diols ayant de 2 à 7 atomes de carbone.

2. Composition de caoutchouc selon la revendication 1, **caractérisée en ce que** la composition de caoutchouc contient de 10 à 40 phr du ou des polyesters.

3. Composition de caoutchouc selon la revendication 1 ou 2, **caractérisée en ce que** le polyester présente une masse moléculaire de 500 à 5 000 g/mole, un indice de groupes hydroxy de 10 à 420, une température de transition vitreuse T_{G} < 0°C, un point de fusion < 10°C, un point d'ébullition > 180°C et un point d'éclair > 200°C.

4. Composition de caoutchouc selon la revendication 3, **caractérisée en ce que** le polyester présente un indice de groupes hydroxy de 20 à 100, une température de transition vitreuse T_{G} < -20°C, un point de fusion ≤ 0°C et un point d'ébullition > 200°C.

5. Composition de caoutchouc selon au moins l'une des revendications précédentes, **caractérisée en ce que** l'acide gras dimérisé contient 36 atomes de carbone.

6. Composition de caoutchouc selon au moins l'une des revendications précédentes, **caractérisée en ce que** le ou les caoutchoucs diène sont choisis dans le groupe constitué par le caoutchouc naturel, le polyisoprène synthétique, le polybutadiène et un copolymère styrène/butadiène.

7. Composition de caoutchouc selon au moins l'une des revendications précédentes, **caractérisée en ce qu'**elle contient de 60 à 80 phr d'au moins une charge polaire.

8. Composition de caoutchouc selon au moins l'une des revendications précédentes, **caractérisée en ce que** la ou les charges polaires est ou sont choisie(s) dans le groupe constitué par l'acide silicique, l'hydroxyde d'aluminium et des silicates lamellaires.

9. Pneumatiques dont la bande de roulement est constituée au moins en partie d'une composition de caoutchouc vulcanisé au soufre selon au moins l'une des revendications 1 à 8.
